# EUROPÄISCHE PATENTSCHRIFT

(11) **EP 0 442 919 B1**
(45) Veröffentlichungstag und Bekanntmachung des Hinweises auf die Patenterteilung: **07.04.1993**
(21) Anmeldenummer: 89912242.8
(22) Anmeldetag: 25.10.1989
(51) Int. Cl.: B29C 65/20

(54) **VORRICHTUNG ZUM VERSCHWEISSEN VON KUNSTSTOFFOLIEN**
DEVICE FOR WELDING PLASTIC FILMS
DISPOSITIF POUR SOUDER DES FEUILLES DE MATIERE SYNTHETIQUE

(30) Priorität: 08.11.1988 DE 3837869; 01.07.1989 DE 3921711
(43) Veröffentlichungstag der Anmeldung: 28.08.1991
(73) Patentinhaber: G.M. PFAFF AKTIENGESELLSCHAFT, 67655 Kaiserslautern (DE)
(72) Erfinder: SCHÄFER, Karlheinz, D-6730 Neustadt (DE); REINHEIMER, Paul, D-6795 Kindsbach (DE); ELLENBERGER, Bernd, D-6751 Gonbach (DE); HERZER, Karl, Christoph, D-6750 Kaiserslautern (DE); LASS, Gerhard, D-6753 Enkenbach-Alsenborn 2 (DE)
(86) Internationale Anmeldenummer: EP8901271
(87) Internationale Veröffentlichungsnummer: WO9005060

(56) Entgegenhaltungen:
- EP-A- 0 009 015
- DE-A- 3 533 338
- DE-A- 3 535 760
- DE-A- 3 617 642
- DE-C- 2 700 971

## Beschreibung

Die Erfindung betrifft eine Vorrichtung zum Verschweißen von Kunststoffolien nach dem Oberbegriff des Anspruches 1 und 10.

Durch das DE-GM 83 01 191 ist eine Schweißvorrichtung mit einem im wesentlichen U-förmigen Gehäuse bekannt, bei dem an den Enden der beiden in verschiedenen Ebenen liegenden und in ihrer gegenseitigen Winkellage veränderbaren Gehäusearme je eine fliegend gelagerte Druckrolle angeordnet ist. Die Andruckrollen sind über entsprechende Getriebe mit je einem eigenen Motor bzw. über jeweils ausrückbare Kupplungen mit einem gemeinsamen Motor verbunden. Die Schweißvorrichtung weist zur Abstützung gegenüber der unteren der beiden miteinander zu verschweißenden Kunststoffolien bzw. gegenüber der Unterlage zwei Paar Laufrollen auf.

Durch die DE-OS 35 35 760 ist eine weitere mobile Schweißvorrichtung mit einem im wesentlichen U-förmigen Gehäuse bekannt, bei dem zur Gewichtseinsparung auf Laufrollen verzichtet wird. Bei dieser Schweißvorrichtung ist ebenfalls jeder der am Ende eines jeden Gehäusearmes angeordneten Druckrollen je ein eigener Motor und ein eigenes Untersetzungsgetriebe zugeordnet. Die Motoren und Getriebe sind koaxial zu den entsprechenden Druckrollen angeordnet. Da hierbei die Motoren von den Gehäusearmen seitlich abstehen, ist die Schweißvorrichtung sperrig und unhandlich.

Der Erfindung liegt die Aufgabe zugrunde, eine mobile Vorrichtung zum Verschweißen von Kunststoffolien zu schaffen, die nicht nur ein möglichst geringes Ge-wicht aufweist, sondern auch kompakt gebaut und damit besonders handlich ist. Die Aufgabe wird durch die kennzeichnenden Merkmale der Ansprüche 1 und 10 gelöst.

Durch die Maßnahme, am Stegteil des U-förmigen Gehäuses einen zum Antrieb beider Druckrollen dienenden Getriebemotor anzuordnen, der zwei einander gegenüberliegende Ausgänge aufweist, welche über je ein Getriebe mit der zugeordneten Druckrolle verbunden sind, wird einerseits durch die Einsparung eines Motors eine Gewichtsreduzierung und andererseits durch Vermeidung seitlich über das Gehäuse vorstehender Teile eine gedrängte Bauweise erzielt. Infolge dieser beiden vorteilhaften Eigenschaften ist die erfindungsgemäß gestaltete Schweißvorrichtung im besonderen Maße für die Herstellung von Tunnelauskleidungen geeignet, bei der während des Schweißens an senkrechten Wänden oder über Kopf das ganze Gewicht der Schweißvorrichtung von der Bedienungsperson getragen werden muß. Die Verwendung eines einzigen Motors für beide Druckrollen bringt den weiteren Vorteil, daß die Druckrollen stets synchron zueinander laufen.

Eine noch raumsparendere Bauweise läßt sich gemäß Anspruch 2 dadurch erzielen, daß der Getriebemotor innerhalb des rohrförmigen, umfangsseitig geschlossenen Stegteils angeordnet wird, wodurch der zusätzliche Vorteil erzielt wird, daß der Getriebemotor gekapselt und damit gegen Verunreinigungen und Beschädigungen geschützt ist.

Durch die im Anspruch 10 angegebene Maßnahme, als Antriebsmotor für die Druckrollen einen Getriebemotor mit nur einem Ausgang zu verwenden, wird es ermöglicht, das Gehäuse der Vorrichtung um die Länge des eingesparten Getriebes schmäler auszubilden. Wenn auch die durch den Wegfall des Getriebes des Getriebemotors bedingte Gewichtseinsparung durch die jetzt erforderlich gewordene Welle im Stegteil und das diese Welle mit dem Getriebemotor verbindende zusätzliche Getriebe ausgeglichen wird, so bringt aber die Verminderung der Länge des Stegteiles, des Druckgliedes und der Lagerung der Druckrollen doch eine spürbare weitere Gewichtsreduzierung der gesamten Vorrichtung.

Von noch größerer Bedeutung ist aber der Vorteil, daß durch die Reduzierung der Gehäusebreite die Vorrichtung sehr viel schmäler und dadurch insgesamt kompakter und infolgedessen erheblich handlicher ist.

Durch die Weiterbildungen gemäß den Ansprüchen 11 und 12 wird auch eine vergleichsweise flache Bauweise der Vorrichtung erzielt, und zwar insbesondere dadurch, daß der Betätigungshebel nach dem Verschwenken der Arme in Arbeitsstellung in eine sich im wesentlichen parallel zu dem ihn tragenden Gehäusearm verlaufende Lage einstellbar ist.

In den anderen Unteransprüchen sind weitere vorteilhafte Ausgestaltungen der Schweißvorrichtung angegeben.

Die Erfindung ist anhand dreier in der Zeichnung dargestellter Ausführungsbeispiele erläutert. Es zeigt:
- Fig. 1: ein Draufsicht auf die Schweißvorrichtung;
- Fig. 2: eine Schnittdarstellung nach Linie II-II der Fig. 1;
- Fig. 3: eine Schnittdarstellung nach Linie III-III der Fig. 1;
- Fig. 4: eine Draufsicht auf die Schweißvorrichtung des zweiten Ausführungsbeispieles;
- Fig. 5: eine Ansicht der Schweißvorrichtung;
- Fig. 6: eine Seitenansicht der Schweißvorrichtung;
- Fig. 7: eine geschnittene Draufsicht auf die Schweißvorrichtung des dritten Ausführungsbeispieles;
- Fig. 8: eine teilweise geschnittene Seitenansicht der Schweißvorrichtung;
- Fig. 9: eine Seitenansicht des auf dem Druckglied aufgeklemmten Druckarmes und
- Fig. 10: eine Schnittdarstellung eines Stellmechanismus für den Druckarm nach Linie IV-IV der Fig. 8.

### Ausführungsbeispiel 1

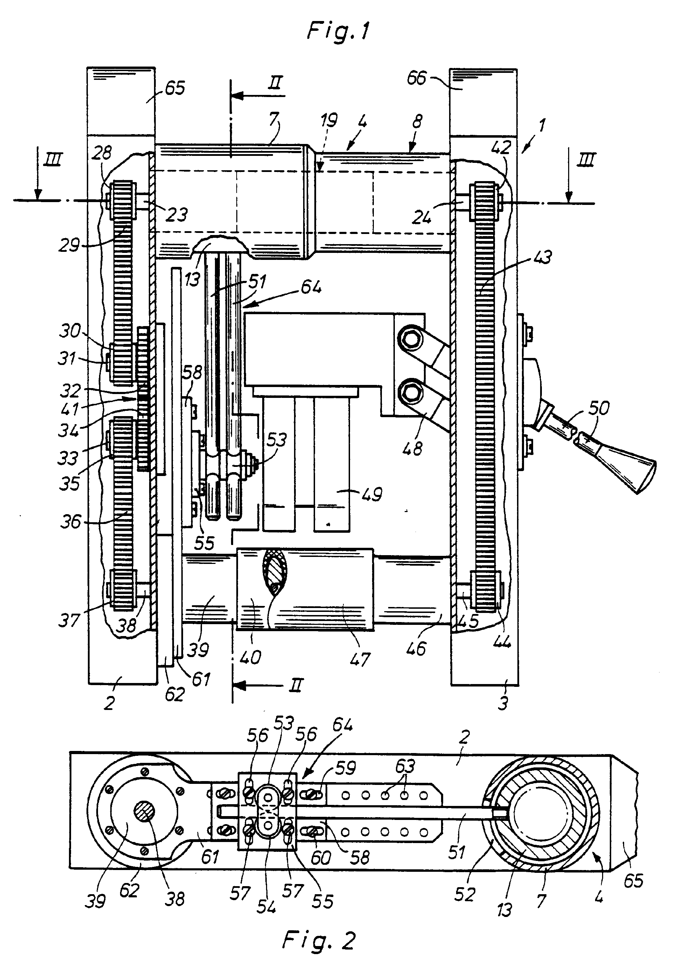

Die in den Figuren 1 bis 3 dargestellte Schweißvorrichtung hat ein im wesentlichen U-förmiges Gehäuse 1, das aus zwei Armen 2 und 3 sowie einem diese miteinander verbindenden Stegteil 4 besteht. Die Arme 2, 3 sind hohl ausgebildet und haben je eine abnehmbare Seitenwand 5, 6.

Das Stegteil 4 ist von zwei teleskopartig ineinandergesteckten Lagerhülsen 7, 8 gebildet, von denen die äußere Lagerhülse 7 mit dem Arm 2 und die innere Lagerhülse 8 mit dem Arm 3 fest verbunden ist. Die innere Lagerhülse 8 besteht aus einem Ringteil 9, einem Rohrstück 10 und einer langgestreckten Nabe 11, wobei diese Teile durch Verschweißen fest miteinander verbunden sind. Die Nabe 11 weist einen Flansch 12, ein Basisteil 13 mit relativ dicker Wandstärke und einen Ansatz 14 auf. Am einen Ende der äußeren Lagerhülse 7 ist ein gestufter Ansatz 15 und am anderen Ende ein zylinderischer Ansatz 16 ausgebildet.

Der Ansatz 16 der äußeren Lagerhülse 7 liegt auf der Nabe 11 auf und bildet mit dieser zusammen ein Lager 17. Auf dem Ansatz 14 der Nabe 11 ist ein Rillenkugellager 18 angeordnet, auf dem sich der Ansatz 15 der äußeren Lagerhülse 7 abstützt. Über die Lager 17, 18 sind die beiden Lagerhülsen 7, 8 drehbar aufeinander abstützt, wodurch auch die Arme 2, 3 relativ zueinander drehbar sind.

Innerhalb der Lagerhülse 8 ist ein bekannter Getriebemotor 19 angeordnet, der aus einem mittig angeordneten Motorteil 20 und zwei außen liegenden Planetengetrieben 21, 22 besteht. Jedes Planetengetriebe 21, 22 hat eine ausgangsseitige Welle 23 bzw. 24. Der Getriebemotor 19 ist über ein Lagerschild 25 drehfest mit der inneren Lagerhülse 8 verbunden, indem das Planetengetriebe 22 mit dem Lagerschild 25 und dieses mit dem Ringteil 9 verschraubt ist. Das andere Ende des Getriebemotors 19 ist in einem Lagerschild 26 abgestützt, das mit dem Planetengetriebe 21 verschraubt ist und sich mit einem nicht näher bezeichneten Absatz am Ansatz 14 der Nabe 11 radial abstützt. Das Lagerschild 26 drückt mit einer Schulter 27 gegen den Innenring des Kugellagers 18 und hält dadurch einerseits den Außenring des Kugellagers 18 in Anlage an einer nicht näher bezeichneten Schulter des Ansatzes 15 der äußeren Lagerhülse 7 und bewirkt andererseits eine Anlage der Stirnfläche des Ansatzes 16 am Flansch 12.

Auf der Welle 23 ist eine Zahnriemenscheibe 28 befestigt, über die ein Zahnriemen 29 läuft. Der Zahnriemen 29 läuft ferner über eine Zahnriemenscheibe 30, die auf einer im Arm 2 fliegend gelagerten Welle 31 befestigt ist. Auf der Welle 31 ist ferner ein Zahnrad 32 befestigt, das mit einem auf einer gleichfalls fliegend gelagerten Welle 33 befestigten Zahnrad 34 kämmt. Auf der Welle 33 ist ferner eine Zahnriemenscheibe 35 befestigt, über die ein Zahnriemen 36 läuft. Der Zahnriemen 36 läuft ferner über eine Zahnriemenscheibe 37, die am einen Ende einer Welle 38 befestigt ist. Die Welle 38 ist in einer am Arm 2 befestigten Lagerhülse 39 aufgenommen und trägt an ihrem anderen Ende eine fest mit diesem verbundene Druckrolle 40. Die beiden Zahnräder 32, 34 bilden ein Umkehrgetriebe 41.

Auf der Welle 24 ist eine Zahnriemenscheibe 42 befestigt, über die ein Zahnriemen 43 läuft. Der Zahnriemen 43 läuft ferner über eine Zahnriemenscheibe 44, die am Ende einer Welle 45 befestigt ist. Die Welle 45 ist in einer am Arm 3 befestigten Lagerhülse 46 aufgenommen und trägt an ihrem anderen Ende eine fest mit ihr verbundene Druckrolle 47.

Am Arm 3 ist mit Hilfe eines Parallelkurbelgetriebes 48 ein elektrisch beheizbarer Heizkeil 49 angeordnet, der durch einen mit dem Parallelkurbelgetriebe 48 verbundenen Handhebel 50 zwischen der in Fig. 1 dargestellten zurückgezogenen Ruhestellung und einer dicht an den Druckrollen 40, 47 gelegenen Arbeitsstellung hin- und herbewegbar ist.

Im Basisteil 13 der Nabe 11 sind zwei parallel zueinander verlaufende Federstäbe 51 befestigt, die durch eine Aussparung 52 in der äußeren Lagerhülse 7 hindurchragen und sich im wesentlichen längs des Armes 2 erstrecken. Die beiden Federstäbe 51 werden von zwei sich gegenüberliegenden Doppelprofilrollen 53, 54 umgriffen, die auf einer ersten Trägerplatte 55 frei drehbar gelagert sind. Die erste Trägerplatte 55 ist mit Hilfe von vertikal verlaufenden Langlöchern 56 und entsprechenden Schrauben 57 auf einer zweiten Trägerplatte 58 quer zur Längsachse der Federstäbe 51 verstellbar angeordnet. Die zweite Trägerplatte 58 ist mit Hilfe von horizontal verlaufenden Langlöchern 59 und entsprechenden Schrauben 60 auf einer Halteplatte 61 parallell zur Längsachse der Federstäbe 51 verstellbar angeordnet. Die Haltplatte 61 ist unter Zwischenschaltung eines Distanzstückes 62 fest am Arm 2 angeordnet und weist eine Vielzahl von Bohrungen 63 auf, wodurch die Trägerplatte 58 um einen oder mehrere Bohrungsabstände auf der Halteplatte 61 versetzt werden kann. Die Bauteile 51 bis 62 bilden einen Andruckmechanismus 64.

An den dem Stegteil 4 benachbarten Enden der Arme 2, 3 sind dreieckförmige, an der vorspringenden Spitze abgerundete Kufen 65, 66 angeordnet.

### Funktionsweise:

Die Schweißvorrichtung dient zum Herstellen von Überlappnähten an Kunststoffolien und zwar insbesondere beim Auskleiden von Tunneln, bei denen die Schweißnähte hauptsächlich in senkrechter Ebene und über Kopf auszuführen sind.

Die Schweißvorrichtung wird derart zwischen den miteinander zu verschweißenden Kunststoffolien angeordnet, daß die eine Kunststoffolie unterhalb des Stegteils 4 und des Heizkeils 49 und die andere Kunststoffolie oberhalb des Stegteils 4 und des Heizkeils 49 verläuft, worauf sie zwischen den Druckrollen 40, 47 unmittelbar aufeinanderliegen.

Der für die Durchführung des Schweißvorganges erforderliche Schweißdruck zwischen den Druckrollen 40, 47 wird durch den Andruckmechanismus 64 bewerkstelligt. Bei entsprechender Einstellung der beiden Trägerplatten 55, 58 werden über die obere Doppelprofilrolle 53 die beiden Federstäbe 51 gemäß Fig. 2 nach abwärts gespannt, wodurch auf das die Federstäbe 51 tragende Basisteil 13 und damit auf die innere Lagerhülse 8 und den mit ihr verbundenen Arm 3 ein Drehmoment ausgeübt wird, welches bewirkt, daß die oben liegende Druckrolle 47 gegen die darunter liegende Druckrolle 40 gepreßt wird.

Bei dem Andruckmechanismus 64 lassen sich zwei verschiedene Grundeinstellungen vornehmen, nämlich einerseits die Größe der Vorspannkraft und andererseits die Höhe der Federsteife der Federstäbe 51. Die Vorspannkraft wird durch quer zur Längsachse der Federstäbe 51 erfolgendes Verschieben der Trägerplatte 55 eingestellt. Die Federsteife der Federstäbe 51 läßt sich durch parallel zur Längsachse der Federstäbe 51 erfolgendes Verschieben bzw. Versetzten der Trägerplatte 58 einstellen, wobei die wirksame Länge der Federstäbe 51 verändert wird.

Durch die beiden verschiedenen Einstellmöglichkeiten des Andruckmechanismus 64 lassen sich die für bestimmte Folienwerkstoffe und Foliendicken optimalen Arbeitsbedingungen einstellen. So ist z. B. beim Verschweißen von HDPE-Folien ein relativ hoher Druck notwendig. Zugleich ist neben der hohen Vorspannung auch eine hohe Federsteife erwünscht, damit beim Schweißen auf der Baustelle Verunreinigungen, wie z. B. Sandkörner und kleine Steine, die versehentlich zwischen die Druckrollen 40, 47 gelangen, in die erweichte Folie eingepreßt werden, so daß auch an diesen Stellen der notwendige Schweißdruck aufrecht erhalten bleibt. Sofern dagegen beim Schweißen größere Übergänge, wie z. B. Quernähte, überfahren werden sollen, wird bei hoher Vorspannkraft eine relativ kleine Federsteife eingestellt, damit die Vorspannkraft beim Überfahren der Übergänge nicht reduziert werden muß.

Ist ein besonders niedriger Schweißdruck gefordert, so kann mit nur einem Federstab 51 gearbeitet werden. Ist dagegen ein extrem hoher Schweißdruck notwendig, so können Federstäbe mit größerem Querschnitt verwendet werden.

Da der gesamte Andruckmechanismus 64 gemäß Fig. 2 nicht über die Oberseite und Unterseite des ihn tragenden Armes 2 hinausragt, ist die gesamte Schweißvorrichtung sehr kompakt und sehr handlich.

Nachdem der Schweißdruck eingestellt worden ist, wird der auf die erforderliche Schweißtemperatur aufgeheizte Heizkeil 49 in die Schweißstellung eingeführt. Sobald der Heizkeil 49 die Schweißstellung erreicht hat, wird der Getriebemotor 19 eingeschaltet, worauf sich die Schweißvorrichtung mit Hilfe der angetriebenenen Druckrollen 40, 47 relativ zu den Folien bewegt, wobei die erweichten Folienbereiche miteinander zu einer Schweißnaht verbunden werden.

### Ausführungsbeispiel 2

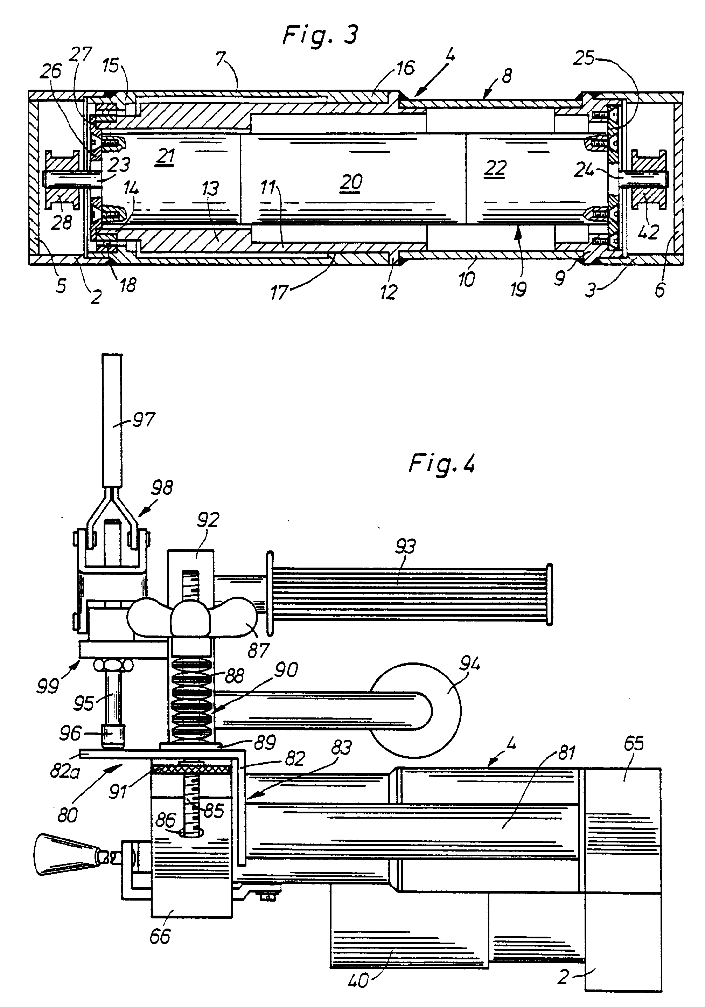

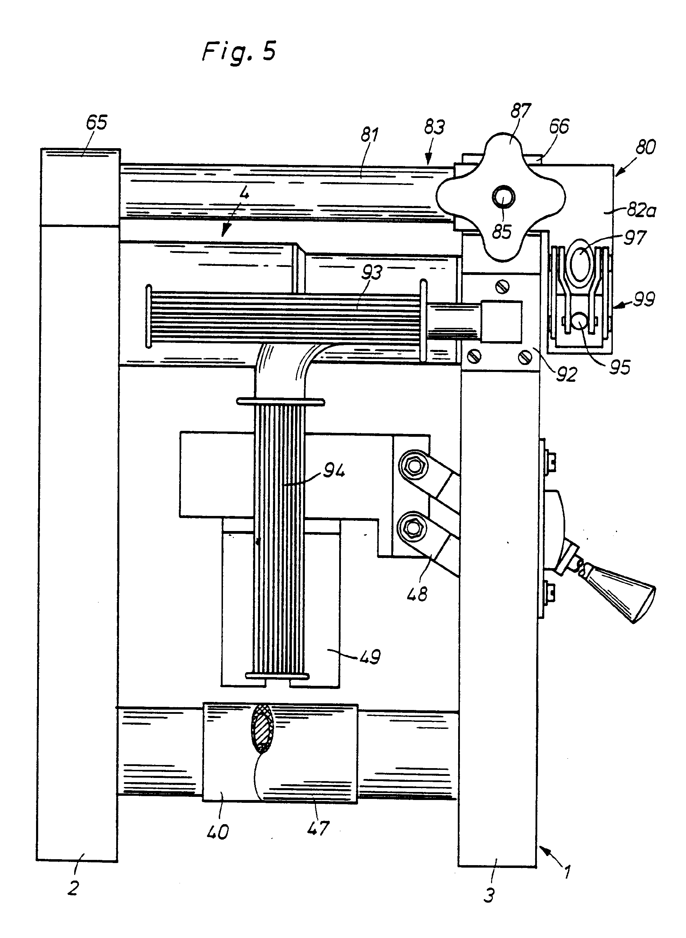

Die in den Figuren 4 bis 6 dargestellte Schweißvorrichtung ist hinsichtlich des Gehäuses und der Antriebsvorrichtung identisch mit der Schweißvorrichtung des ersten Ausführungsbeispiels. Das im wesentlichen U-förmige Gehäuse 1 besteht ebenfalls aus den beiden Armen 2, 3 sowie aus einem diese gelenkig miteinander verbindenden Stegteil 4, in dem der in diesem Fall nicht dargestellte Getriebemotor für die Druckrollen 40, 47 angeordnet ist. Die Schweißvorrichutng weist ebenfalls einen an einem Parallelkurbelgetriebe 48 angeordneten Heizkeil 49 auf. Desweiteren sind an den dem Stegteil 4 benachbarten Enden der Arme 2, 3 dreieckförmige, an der vorspringenden Spitze abgerundete Kufen 65, 66 befestigt.

Dagegen ist der zum Erzeugen des Schweißdruckes verwendete Andruckmechanismus 80 völlig anders aufgebaut wie der Andruckmechanismus 64 des ersten Ausführungsbeispieles. Der Andruckmechanismus 80 weist einen an der Kufe 65 des Armes 2 befestigtes stangenförmiges Druckglied 81 auf, das sich mit Abstand zum Stegteil 4 parallel zu dessen Längsachse erstreckt. Am freien Ende des Druckgliedes 81 ist ein Winkelstück 82 befestigt, das eine L-förmig ausgebildete waagrechte Schenkelplatte 82a aufweist. Das Druckglied 81 und das Winkelstück 82 bilden gemeinsam einen Druckbalken 83. In einem in der Kufe 66 aufgenommenen Drehstück 84 ist eine Gewindespindel 85 befestigt, die durch eine Bohrung 86 der Kufe 66 und eine nicht dargestellte Bohrung der Schenkelplatte 82a hindurchragt. Auf dem oberhalb der Schenkelplatte 82a befindlichen Teil der Gewindespindel 85 sind ein Handgriff 87 und eine Vielzahl von Tellerfedern 88 angeordnet, die sich über eine Unterlagscheibe 89 auf der Schenkelplatte 82a abstützen. Die Bauteile 85, 87, 88 und 89 bilden einen Federmechanismus 90. Unterhalb der Schenkelplatte 82a ist auf der Gewindespindel 85 eine mit entsprechendem Innengewinde versehene höhenmäßig einstellbare Anschlagscheibe 91 angeordnet.

Auf dem Arm 3 ist eine Winkelkonsole 92 befestigt, an der ein längs und ein quer zu den Armen 2, 3 verlaufender Handgriff 93 bzw. 94 fest angeordnet ist. In der Winkelkonsole 92 ist eine längs verschiebbare Stange 95 aufgenommen, deren unteres Ende ein Druckstück 96 trägt und das ferner mit einem einen Handgriff 97 aufweisenden Kniehebelgetriebe 98 verbunden ist. Die Bauteile 92 sowie 95 bis 98 bilden einen Stellmechanismus 99.

### Funktionsweise:

Bis auf die Einstellung des Schweißdruckes ist die übrige Funktionsweise der Schweißvorrichtung die gleiche wie bei der Schweißvorrichtung nach dem ersten Ausführungsbeispiel, so daß es sich erübrigt, hierauf näher einzugehen.

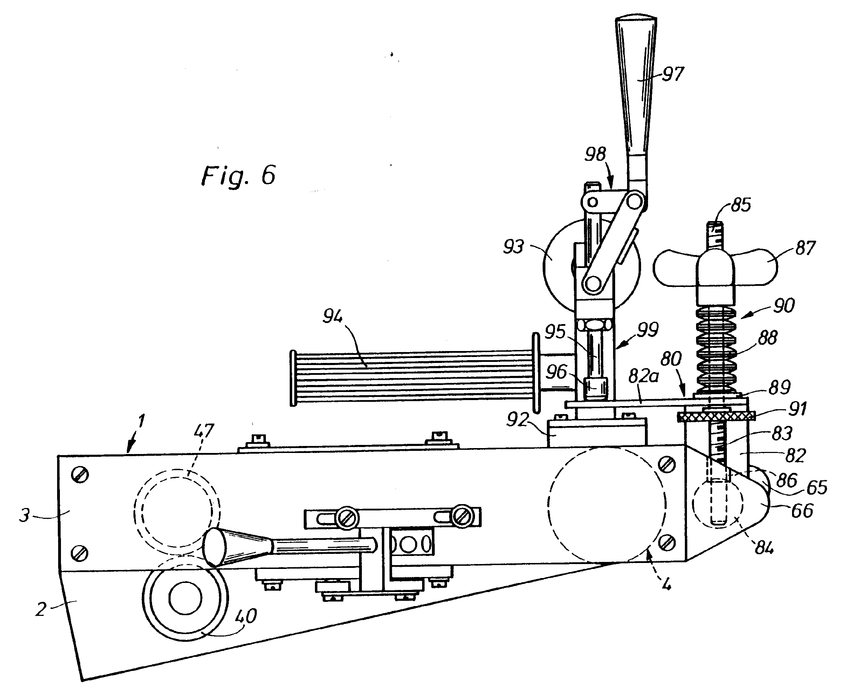

Die Höhe des Schweißdruckes wird mit Hilfe des Handgriffes 87 eingestellt. Durch Abwärtsdrehen des Handgriffes 87 werden die Tellerfedern 88 stärker gegen die Schenkelplatte 82a gepreßt und damit der Druckbalken 83 insgesamt nach abwärts gedrückt. Die auf den Druckbalken 83 einwirkende Anpreßkraft bewirkt, daß auf die Kufe 65 ein gemäß Fig. 6 im Uhrzeigersinn wirkendes Drehmoment ausgeübt wird. Aufgrund dieses Drehmomentes wird der Arm 2 gemäß Fig. 6 im Uhrzeigersinn geschwenkt, wodurch die Druckrolle 40 nach aufwärts gegen die Druckrolle 47 angepreßt wird.

Durch die Anschlagscheibe 91 läßt sich der gemeinsame Winkel zwischen den in Schweißstellung befindlichen Armen 2, 3 begrenzen, d. h. die Arme bzw. die Druckrollen 40, 47 lassen sich nicht mehr weiter aufeinanderzubewegen, wenn die Schenkelplatte 82a auf der Anschlagscheibe 91 aufliegt. Auf diese Weise läßt sich die Dicke der herzustellenden Schweißnaht exakt einstellen.

Mit Hilfe des Stellmechanismus 99 lassen sich die Arme 2, 3 voneinanderwegbewegen, worauf zwei neue Folien unbehindert zwischen die Druckrollen 40, 47 eingeführt werden können. Zu diesem Zweck wird der Handgriff 97 nach abwärts geschwenkt und dadurch die Stange 95 ebenfalls nach abwärts bewegt. Im Verlauf dieser Bewegung stößt das Druckstück 96 auf die sich auf der Anschlagscheibe 91 abstützende Schenkelplatte 82a und bewirkt, daß der in diesem Fall als zweiarmiger Hebel wirkende Druckbalken 83 insgesamt um die jetzt als Drehachse dienende Anschlagscheibe 91 geschwenkt wird, wobei diese Schwenkbewegung gemäß Fig. 4 entgegen dem Uhrzeigersinn erfolgt. Die Schwenkbewegung führt zu einer elastischen Verbiegung des fest mit der Kufe 65 verbundenen Druckgliedes 81, wodurch auf die Kufe 65, welche gemeinsam mit dem Arm 2 um die Längsachse des Stegteiles 4 schwenkbar ist, ein gemäß Fig. 6 entgegen dem Uhrzeigersinn wirkendes Drehmoment ausgeübt wird. Sobald dieses Drehmoment stärker ist als das vom Federmechanismus 90 erzeugte entgegengesetzt gerichtete Drehmoment, wird der Arm 2 gemäß Fig. 6 entgegen dem Uhrzeigersinn verschwenkt, wodurch sich die Druckrolle 40 von der Druckrolle 47 entfernt.

### Ausführungsbeispiel 3

Die Schweißvorrichtung hat ein im wesentlichen U-förmiges Gehäuse 100, das aus zwei Armen 101 und 102 sowie einem diese miteinander verbindenden Stegteil 103 besteht. Die Arme 101, 102 sind hohl ausgebildet und haben je eine abnehmbare Seitenwand 104, 105.

Das Stegteil 103 ist von zwei teleskopartig ineinandergesteckten Lagerhülsen 106, 107 gebildet, von denen die äußere Lagerhülse 106 mit dem Arm 102 und die innere Lagerhülse 107 mit dem Arm 101 fest verbunden ist. Die äußere Lagerhülse 106 ist über zwei Nadellager 108, 109 drehbar auf der inneren Lagerhülse 107 abgestützt, wodurch auch die Arme 101, 102 relativ zueinander drehbar sind.

Das Nadellager 108 stützt sich an einer Seite an einem Ansatz 110 der inneren Lagerhülse 107 und an der anderen Seite an einem in der äußeren Lagerhülse 106 angeordneten Sicherungsring 111 ab. Das Nadellager 109 stützt sich an einer Seite an einem in der inneren Lagerhülse 107 angeordneten Sicherungsring 112 und an der anderen Seite an einem am Arm 102 angeschraubten Lagerschild 113 ab.

In zwei Lagerbüchsen 114 der inneren Lagerhülse 107 ist eine durchgehende Welle 115 gelagert. Auf dem in den Arm 101 hineinreichenden Ende der Welle 115 sind eine Zahnriemenscheibe 116 und unmittelbar angrenzend ein Zahnrad 117 befestigt, das seitlich an der Innenseite des Armes 101 anliegt. Auf dem anderen in den Arm 102 hineinreichenden Ende der Welle 115 ist eine Zahnriemenscheibe 118 befestigt, die seitlich am Lagerschild 113 anliegt. Die auf der Welle 115 befestigten Zahnriemenscheiben 116, 118 und das Zahnrad 117 bilden eine axial wirkende Halterung für die Arme 101, 102.

Das Zahnrad 117 kämmt mit einem Zahnrad 119, das auf einer im Arm 101 fliegend gelagerten Welle 120 befestigt ist. Auf der Welle 120 ist ferner eine Zahnriemenscheibe 122 befestigt, über die ein Zahnriemen 123 läuft. Der Zahnriemen 123 läuft ferner über eine Zahnriemenscheibe 124, die am Ende einer Welle 125 befestigt ist. Die Welle 125 ist in einer am Arm 101 befestigten Lagerhülse 126 aufgenommen und trägt an ihrem anderen Ende eine fest mit diesem verbundene Druckrolle 127. Die Bauteile 117, 119 bis 124 bilden gemeinsam ein erstes, den Drehsinn umkehrendes Getriebe 128.

Über die Zahnriemenscheibe 118 läuft ein Zahnriemen 129, der ferner über eine am Ende einer Welle 130 befestigte Zahnriemenscheibe 131 läuft. Die Welle 130 ist in einer am Arm 102 befestigten Lagerhülse 132 aufgenommen und trägt an ihrem anderen Ende eine fest mit ihr verbundene Druckrolle 133. Die Bauteile 118, 129 und 131 bilden gemeinsam ein zweites, den Drehsinn beibehaltendes Getriebe 134.

An dem der Druckrolle 127 gegenüberliegenden Endbereich des Armes 101 ist ein rohrförmig ausgebildetes Druckglied 135 befestigt, das ein Bestandteil eines nachfolgend näher erläuterten Andruckmechanismus 136 ist. Am Arm 101 ein bekannter Getriebemotor 137 befestigt, der sich innerhalb des Druckgliedes 135 erstreckt, ohne die jedoch zu berühren. Der Getriebemotor 137 besteht aus einem Motorteil 138 und einem seitlich angeflanschten Planetengetriebe 139. Das Planetengetriebe 139 hat eine Welle 140, die einem Ausgang des Getriebes bildet.

Auf der Welle 140 ist eine Zahnriemenscheibe 141 befestigt, über die ein Zahnriemen 142 läuft. Der Zahnriemen 142 läuft ferner über die schon beschriebene Zahnriemenscheibe 116. Die Bauteile 116, 141, 142 bilden gemeinsam ein Getriebe 143, das den Ausgang des Planetengetriebes 139 mit der Welle 115 antriebsmäßig verbindet.

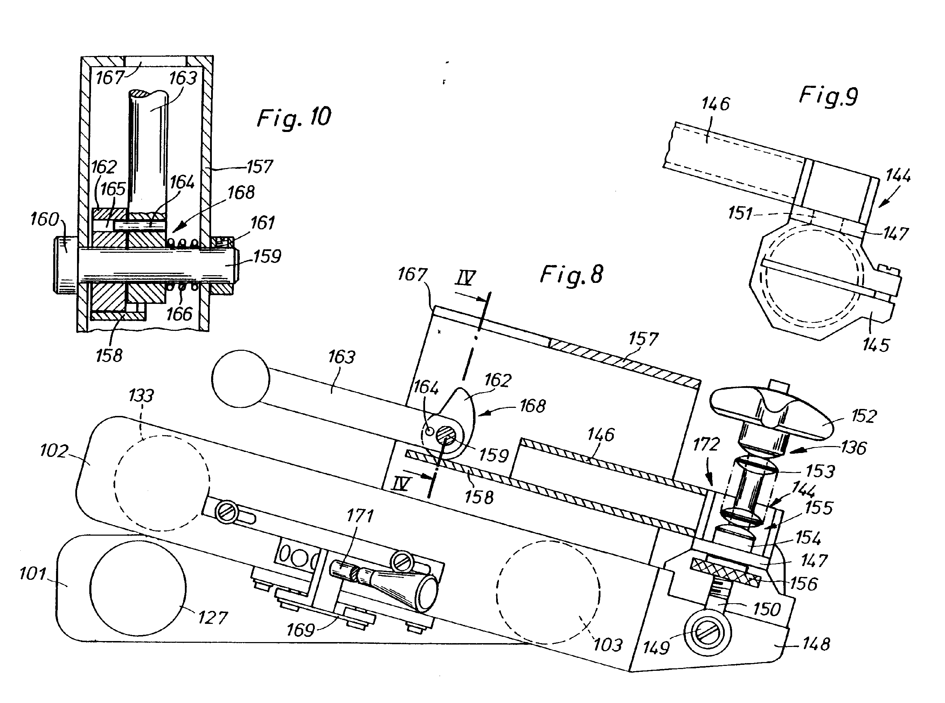

Auf dem Druckglied 135 ist ein Druckarm 144 drehfest aufgeklemmt, der gemäß Fig. 9 aus einer geschlitzten Spannhülse 145, einem aus einem Viereck-Hohlprofil bestehenden, sich oberhalb des Armes 102, parallel zu diesem erstreckenden Ausleger 146 und einem quer zu diesem erstreckenden Ansatz 147 besteht.

An dem der Druckrolle 133 gegenüberliegenden Ende des Armes 102 ist eine schmale Trägerplatte 148 befestigt. An der Tägerplatte 148 ist mit Hilfe einer Bundschraube 149 eine Gewindespindel 150 schwenkbar angeordnet, die durch eine im Ansatzt 147 vorgesehene Bohrung 151 Fig. 9 hindurchragt. Auf dem oberhalb der Ansatzes 147 befindlichen Teil der Gewindespindel 150 sind ein Handgriff 152 und eine Vielzahl von Tellerfedern 153 angeordnet, die sich über eine Unterlagscheibe 154 auf dem Ansatz 147 abstützen. Die Bauteile 150, 152, 153 und 154 bilden gemeinsam einen Federmechanismus 155.

Unterhalb des Ansatzes 147 ist auf der Gewindespindel 150 eine mit entsprechendem Innengewinde versehene höhenmäßig einstellbare Anschlagscheibe 156 angeordnet.

Auf dem Arm 102 ist eine im Querschnitt U-förmige Konsole 157 befestigt, in die der Ausleger 146 hineinragt. In der Konsole 157 ist oberhalb eines flachen Ansatzstückes 158 des Auslegers 146 eine Welle 159 gelagert, die einerends einen Bund 160 aufweist und anderenends einen Klemmring 161 trägt. Auf der Welle 159 ist ein Exzenter 162 befestigt, der mit dem Ansatzstück 158 des Auslegers 146 zusammenwirkt. Auf der Welle 159 ist neben dem Exzenter 162 ein Betätigungshebel 163 drehbar gelagert. Im Betätigungshebel 163 ist ein in Richtung des Exzenters 162 seitlich abstehender Stift 164 fest angeordnet. Im Exzenter 162 sind mehrere Bohrungen 165 vorgesehen, deren Durchmesser und radialer Abstand zur Welle 159 so bemessen sind, daß der Stift 164 in sie eingreifen kann. Eine auf der Welle 159 angeordnete Druckfeder 166 hält den Betätigungshebel 163 in Anlage am Exzenter 162. Der Stift 164, die Bohrungen 165 und die Druckfeder 166 bilden gemeinsam eine ausrückbare Kupplung. In der Konsole 157 ist oberhalb des Exzenters 162 eine Aussparung 167 enthalten, die es ermöglicht, daß der Betätigungshebel 163 in eine senkrecht zum Arm 102 verlaufende Stellung geschwenkt werden kann. Die Bauteile 159 bis 166 bilden gemeinsam einen Stellmechanismus 168.

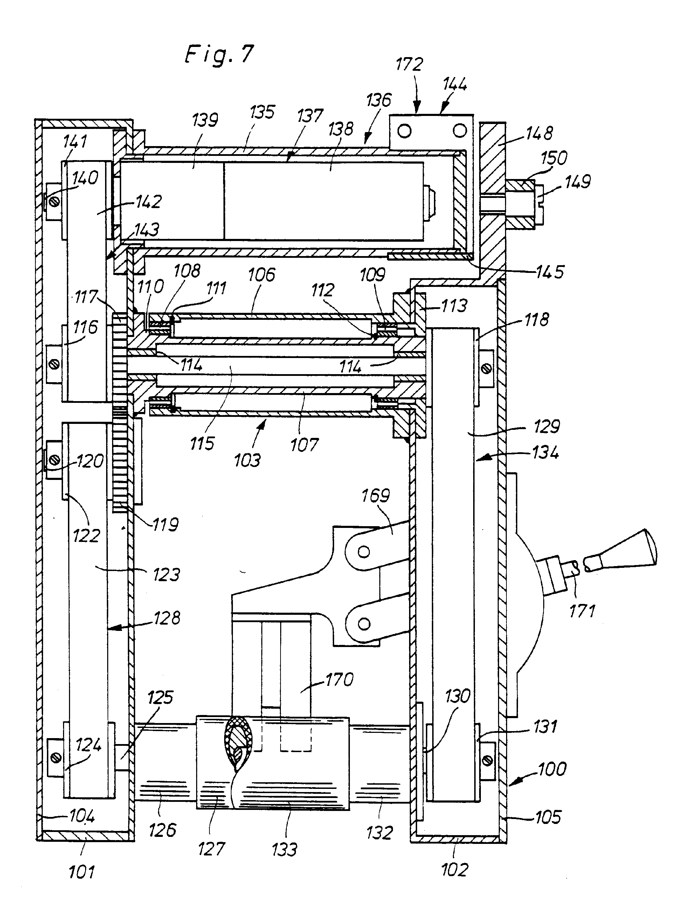

Am Arm 102 ist mit Hilfe eines Parallelkurbelgetriebes 169 ein elektrisch beheizbarer Heizkeil 170 angeordnet, der durch einen mit dem Parallelkurbelgetriebe 169 verbundenen Handhebel 171 zwischen einer von den Druckrollen 127, 133 entfernten Ruhestellung und der in Fig. 7 dargestellten, dicht an den Druckrollen 127, 133 gelegenen Arbeitsstellung hin- und herbewegbar ist.

### Funktionsweise:

Die Schweißvorrichtung dient zum Herstellen von Überlappnähten an Kunststoffolien und zwar insbesondere beim Auskleiden von Tunneln, bei denen die Schweißnähte hauptsächlich in senkrechter Ebene und über Kopf auszuführen sind.

Die Schweißvorrichtung wird derart zwischen den miteinander zu verschweißenden Kunststoffolien angeordnet, daß die eine Kunststoffolie unterhalb des Stegteils 103 und des Heizkeils 170 und die andere Kunststoffolie oberhalb des Stegteils 103 und des Heizkeils 170 verläuft, worauf sie zwischen den Druckrollen 127, 133 unmittelbar aufeinanderliegen.

Der für die Durchführung des Schweißvorganges erforderliche Schweißdruck zwischen den Druckrollen 127, 133 wird durch den Andruckmechanismus 136 bewerkstelligt.

Die Höhe des Schweißdruckes wird mit Hilfe des Handgriffes 152 eingestellt. Durch Abwärtsdrehen des Handgriffes 152 werden die Tellerfedern 153 stärker gegen den Ansatz 147 gepreßt, wodurch das Druckglied 135 nach abwärts gedrückt wird. Die auf das Druckglied 135 einwirkende Anpreßkraft bewirkt, daß auf den Arm 101 ein gemäß Fig. 2 im Uhrzeigersinn wirkendes Drehmoment ausgeübt wird. Aufgrund dieses Drehmomentes wird der Arm 101 gemäß Fig. 2 im Uhrzeigersinn geschwenkt, wodurch die Druckrolle 127 nach aufwärts gegen die Druckrolle 133 angepreßt wird.

Durch die Anschlagscheibe 156 läßt sich der gemeinsame Winkel zwischen den in Schweißstellung befindlichen Armen 101, 102 begrenzen, d. h. die Arme bzw. die Druckrollen 127, 133 lassen sich nicht mehr weiter aufeinanderzubewegen, wenn der Ansatz auf der Anschlagscheibe 156 aufliegt. Auf diese Weise läßt sich die Dicke der herzustellenden Schweißnaht exakt einstellen.

Mit Hilfe des Stellmechanismus 168 lassen sich die Arme 101, 102 voneinanderwegbewegen, worauf zwei neue Folien unbehindert zwischen die Druckrollen 127, 133 eingeführt werden können. Zu diesem Zweck wird der Betätigungshebel 163 aus der in Fig. 2 dargestellten Lade nach aufwärts geschwenkt. Der hierbei über den Stift 164 mitgedrehte Exzenter 162 verschwenkt den Ausleger 146 entgegen dem Uhrzeigersinn, wobei sich der Druckarm 144 mit dem Ansatz 147 auf der Anschlagscheibe 156 abstützt. Da das Druckglied 135 und der Druckarm 144 fest miteinander verbunden sind und damit einen zusammenhängenden Druckbalken 172 bilden, bewirkt die vom Stellmechanismus 168 ausgehende Stellbewegung, daß der sich in diesem Fall als zweiarmiger Hebel abstützende Druckbalken 172 insgesamt um die jetzt als Drehachse dienende Anschlagscheibe 156 deschwenkt wird. Die Schwenkbewegung führt zu einer elastischen Verbiegung des fest mit dem Arm 101 verbundenen Druckgliedes 135, wodurch auf den Arm 101 ein Drehmoment ausgeübt wird. Sobald dieses Drehmoment stärker ist als das vom Federmechanismus 155 erzeugte entgegengesetzt gerichtete Drehmoment, wird der Arm 101 gemäß Fig. 2 entgegen dem Uhrzeigersinn verschwenkt, wodurch sich die Druckrolle 127 von der Druckrolle 133 entfernt.

## Patentansprüche

1. Vorrichtung zum Verschweißen von Kunststoffolien mit einem im wesentlichen U-förmigen Gehäuse (1), das von zwei Armen (2, 3) und einem diese miteinander verbindenden Stegteil (4) gebildet ist, wobei die Arme (2, 3) um die Längsachse des Stegteils (4) relativ zueinander verschwenkbar sind, mit je einer am freien Ende eines jedem Armes (2, 3) angeordneten angetriebenen Druckrolle (40, 47), einem Andruckmechanismus (64; 80) zum Aufeinanderpressen der Druckrollen (40, 47) und einem Heizelement (49), dadurch gekennzeichnet, daß am Stegteil (4) ein zum Antrieb beider Druckrollen (40, 47) dienender Getriebemotor (19) angeordnet ist, der zwei einander gegenüberliegende Ausgänge (23, 24) aufweist, welche unter Zwischenschaltung je eines Getriebes (28 - 37 bzw. 42 - 44) die beiden Druckrollen (40, 47), gegenläufig antreiben.

2. Vorrichtung nach Anspruch 1, dadurch gekennzeichnet, daß der Getriebemotor (19) innerhalb des rohrförmig ausgebildeten, umfangsseitig geschlossenen Stegteils (4) angeordnet ist.

3. Vorrichtung nach Anspruch 2, dadurch gekennzeichnet, daß der Stegteil (4) aus zwei teleskopartig ineinander gesteckten, mit je einem der beiden Arme (2, 3) fest verbundenen Lagerhülsen (7, 8) besteht, von denen die innere Lagerhülse (8) mit dem Getriebemotor (19) drehfest verbunden ist.

4. Vorrichtung nach Anspruch 3, dadurch gekennzeichnet, daß sich die innere Lagerhülse (8) über die gesamte Länge des Getriebemotors (19) und die äußere Lagerhülse (7) wenigstens bis zur Mitte der inneren Lagerhülse (8) erstreckt und daß die beiden Lagerhülsen (7, 8) über zwei Lager (17, 18) aufeinander abgestützt sind, deren gegenseitiger Abstand im wesentlichen der Länge der äußeren Lagerhülse (7) entspricht.

5. Vorrichtung nach Anspruch 3 und 4, dadurch gekennzeichnet, daß die innere Lagerhülse (8) als Träger für wenigstens einen durch eine Aussparung (52) der äußeren Lagerhülse (7) hindurchragenden und sich im wesentlichen parallel zum relativ zum Getriebemotor (19) bewegbaren Arm (2) erstreckenden Federstab (51) eines Andruckmechanismus (64) dient, der ein an dem Arm (2) angeordnetes, mit dem Federstab (51) zusammenwirkendes Druckstück (53, 54) aufweist.

6. Vorrichtung nach Anspruch 5, dadurch gekennzeichnet, daß das Druckstück von wenigstens einer sich auf dem Federstab (51) abstützenden Rolle (53) gebildet ist, die zur Veränderung der wirksamen Länge des Federstabes (51) längs des sie tragenden Armes (2) und zur Veränderung der Vorspannung des Federstabes (51) quer zum Arm (2) einstellbar ist.

7. Vorrichtung nach einem oder mehreren der Ansprüche 1 bis 4, dadurch gekennzeichnet, daß einer der Arme (2) als Halterung für ein mit Abstand zum Stegteil (4) angeordnetes, parallel zu dessen Längsachse verlaufendes Druckglied (81) dient, das ein Bestandteil eines Druckbalkens (83) eines Andruckmechanismus (80) ist, und daß der Druckbalken (83) durch einen sich am anderen Arm (3) abstützenden einstellbaren Federmechanismus (90) beaufschlagbar ist.

8. Vorrichtung nach Anspruch 7, dadurch gekennzeichnet, daß auf der dem Federmechanismus (90) gegenüberliegenden Seite des Druckbalkens (83) ein Anschlagelement (91) angeordnet ist und daß dem freien Ende des Druckbalkens (83) ein ihn um das Anschlagelement (91) verschwenkender Stellmechanismus (99) zugeordnet ist.

9. Vorrichtung nach Anspruch 8, dadurch gekennzeichnet, daß das Anschlagelement (91) zur Begrenzung des Schwenkwinkels der in Arbeitsstellung befindlichen Arme (2, 3) einstellbar ist.

10. Vorrichtung zum Verschweißen von Kunstoffolien mit einem im wesentlichen U-förmigen Gehäuse (100), das von zwei Armen (101, 102) und einem diese miteinander verbindenden Stegteil (103) gebildet ist, wobei die Arme (101, 102) um die Längsachse des Stegteils (103) relativ zueinander verschwenkbar sind, mit je einer am freien Ende eines jeden Armes (101, 102) angeordneten angetriebenen Druckrolle (127, 133), einem Andruckmechanismus (136) zum Aufeinanderpressen der Druckrollen (127, 133) und einem Heizelement (170), dadurch gekennzeichnet, daß der Andruckmechanismus (136) ein an einem der Arme (101) mit Abstand zum Stegteil (103) angeordnetes, im wesentlichen parallel zu dessen Längsachse verlaufendes stangenförmiges Druckglied (135) und einen mit diesem zusammenwirkenden, sich am anderen Arm (102) abstützenden Federmechanismus (155) aufweist, daß innerhalb des rohrförmig ausgebildeten Druckgliedes (135) ein zum Antrieb beider Druckrollen (127, 133) dienender, nur einen Ausgang (Welle 140) augweisender Getriebemotor (137) angeordnet ist, und daß der Ausgang (Welle 140) des Getriebemotors (137) über ein Getriebe (143), eine innerhalb des Stegteils (103) gelagerte Welle (115) und ein erstes, die Drehrichtung umkehrendes Getriebe (128) mit der einen Druckrolle (127) und ein zweites, den Drehsinn beibehaltendes Getriebe (134) mit der anderen Druckrolle (133) verbunden ist.

11. Vorrichtung nach Anspruch 10, dadurch gekennzeichnet, daß das Druckglied (135) einen quer abstehenden drehfest angeordneten Druckarm (144) trägt, der sich auf einem Anschlagelement (Anschlagscheibe 156) des Federmechanismus (155) abstützt und oberhalb des nicht mit dem Druckglied (135) verbundenen Armes (102) des Gehäuses (100) erstreckt und daß dem freien Ende (Ansatzstück 158) des Druckarmes (144) ein von einem drehbaren Exzenter (162) und einem Betätigungshebel (163) gebildeter Stellmechanismus (168) zugeordnet ist.

12. Vorrichtung nach Anspruch 11, dadurch gekennzeichnet, daß der Betätigungshebel (163) über eine mehrere Stellungen aufweisende ausrückbare Kupplung (164, 165, 166) mit dem Exzenter (162) verbunden ist.

## Claims

1. Device for welding of plastic foils with a substantially U-shaped housing (1) which is formed by two arms (2, 3) and a web (4) which interconnects the latter, wherein the arms (2, 3) are pivotable relative to each other around the longitudinal axis of the web (4), comprising a driven pressure roller (40, 47) arranged at a respective free end of each arm (2, 3), a press-on mechanism (64; 80) for pressing the pressure rollers (40, 47) together, and a heating element (49), **characterised in that** at the web (4) is arranged a geared motor (19) for driving both pressure rollers (40, 47), which has two oppositely located outputs (23, 24) which, with a respective gearing (28 - 37 or 42 - 44) thereinbetween, drive both pressure rollers (40, 47) in opposite direction.

2. Device according to claim 1, **characterised in that** the geared motor (19) is arranged within a tubularly shaped, peripherally sealed web (4).

3. Device according to claim 2, **characterised in that** the web (4) comprises two telescopically interconnected mounting sleeves (7, 8), which are firmly connected to one each of the two arms (2, 3) and of which the inner mounting sleeve (8) is non-rotationally connected to the geared motor (19).

4. Device according to claim 3, **characterised in that** the inner mounting sleeve (8) extends over the entire length of the geared motor (19), and the outer mounting sleeve (7) extends at least up to the middle of the inner mounting sleeve (8), and that both mounting sleeves (7, 8) are supported on top of each other by means of two mountings (17, 18), their respective gap substantially corresponding with the length of the outer mounting sleeve (7).

5. Device according to claim 3 and 4, **characterised in that** the inner mounting sleeve (8) serves as a carrier for at least one spring rod (51), which extends through a cut-out (52) of the outer mounting sleeve (7) and substantially parallel to an arm (2), which is movable relative to the geared motor (19), of a press-on mechanism (64) which comprises a pressure element (53, 54), which is arranged at the arm (2) and which co-acts with the spring rod (51).

6. Device according to claim 5, **characterised in that** the pressure element is formed by at least one roller (53), which is supported against the spring rod (51) and which is adjustable along its supporting arm (2) for the purpose of changing the effective length of the spring rod (51), and transversely to the arm (2) for the purpose of changing the tension of the spring rod (51).

7. Device according to one or more of claims 1 to 4, **characterised in that** one of the arms (2) serves as a holder for a pressure element (81), which is arranged at a distance from web (4) and which extends parallel with its longitudinal axis and which is part of a pressure bar (83) of a press-on mechanism (80), and that the pressure bar (83) is loaded by an adjustable spring mechanism (90) which is supported against the other arm (3).

8. Device according to claim 7, **characterised in that** an abutment (91) is arranged at the side of pressure bar (83) opposite the spring mechanism (90), and that the free end of the pressure bar (83) is associated with an operating mechanism (99) which pivots the latter around the abutment element (91).

9. Device according to claim 8, **characterised in that** the abutment element (91) is adjustable for limiting the pivot angle of arms (2, 3) in their operating position.

10. Device for welding plastic foils with a substantially U-shaped housing (100) which is formed by two arms (101, 102) and a web (103) which interconnects the latter, wherein the arms (101, 102) are pivotable relative to each other around the longitudinal axis of the web (103), comprising a driven pressure roller (127, 133) arranged at a respective free end of each arm (101, 102), a press-on mechanism (137) for pressing the pressure rollers (127, 133) together, and a heating element (170), **characterised in that** the press-on mechanism (130) comprises a rod-shaped pressure element (135), which is arranged at one of the arms (101) at a distance to the web (103) and which extends substantially parallel to the longitudinal axis of the latter, and a spring mechanism (155), which co-acts therewith and which is supported at the other arm (102), and that within the tubular pressure element (135) is arranged a geared motor (137) with only one output (shaft 140), which serves to drive both pressure rollers (127, 133), and that the output (shaft 140) of the geared motor (137) is connected, via a gearing (143), a shaft mounted within the web (103) and a first gearing (128) which reverses the direction of rotation, to the one pressure roller (127), and via a second gearing (134) which maintains the rotational orientation of the gearing (134) to the other pressure roller (133).

11. Device according to claim 10, **characterised in that** the pressure element (135) carries a pressure arm (144), which is arranged non-rotationally and transversely protruding and which is supported against an abutment element (abutment plate 150) of a spring mechanism (155) and which extends above an arm (102) of housing (100), which is not connected to the pressure element (135), and that the free end (attachment portion 158) of the pressure arm (144) is associated with an operating mechanism (168), which is formed by a rotatable eccenter (162) and an operating lever (163).

12. Device according to claim 1, **characterised in that** the operating lever (163) is connected to the eccenter (162) via an disengagable coupling (164, 165, 166) having a plurality of positions.

## Revendications

1. Dispositif de soudage de feuilles en matière synthétique, comportant un carter (1) sensiblement en forme de U, formé par deux bras (2,3) et une partie de pontage (4) les reliant ensemble, les bras (2,3) étant susceptible de pivoter, l'un par rapport à l'autre, autour de l'axe longitudinal de la partie de pontage (4), avec un rouleau de pression entraîné (40,47), disposé à l'extrémité libre de chaque bras (2,3), un mécanisme de pression (54;80), pour presser l'un sur l'autre les rouleaux de pression (40,47) et un élément de chauffage (49), caractérisé en ce que, sur la partie de pontage (4) est disposé un moto-réducteur (19), servant à l'entraînement des deux rouleaux de pression (40,47) et présentant deux sorties (23,24) opposées entre elles, assurant l'entraînement en sens de rotation inverse des deux rouleaux de pression (40,47), avec interposition chaque fois d'un réducteur (28 à 37 respectivement 42 à 44).

2. Dispositif selon la revendication 1, caractérisé en ce que le moto-réducteur (19) est disposé à l'intérieur de la partie de pontage (4) à configuration tubulaire et fermée en périphérie.

3. Dispositif selon la revendication 2, caractérisé en ce que la partie de pontage (4) est composée de deux douilles de palier (7,8), enfichées l'une dans l'autre de façon télescopique, chacune reliée rigidement à l'un des bras (2,3), dont la douille de palier (8) intérieur est assujettie en rotation au moto-réducteur (19).

4. Dispositif selon la revendication 3, caractérisé en ce que la douille de palier intérieure (8) s'étend sur la totalité de la longueur du moto-réducteur (19) et la douille de palier extérieure (7) s'étend au moins jusqu'à mi-longueur de la douille de palier intérieure (8), et en ce que les deux douilles de palier (7,8) sont soutenues par l'intermédiaire de deux paliers (17,18), dont l'espacement mutuel correspond sensiblement à la longueur de la douille de palier extérieure (7).

5. Dispositif selon les revendications 3 et 4, caractérisé en ce que la douille de palier intérieure (8) sert de support pour au moins une tige élastique (51), passant à travers un évidement (52) ménagé dans la douille de palier extérieure (7) et s'étendant sensiblement parallèlement au bras (2) s'étendant parallèlement au moto-réducteur (19), d'un mécanisme de pression (64) présentant une pièce de pression (53,54) , disposée sur le bras (2) et coopérant avec la tige élastique (51).

6. Dispositif selon la revendication 5, caractérisé en ce que la pièce de pression est formée d'au moins un rouleau (53) prenant appui sur la tige élastique (51) et susceptible d'être réglé, transversalement par rapport au bras (2), en vue de modifier la longueur active de la tige élastique (51), le long du bras (2) qui le porte et pour modifier la précontrainte de la tige métallique (51).

7. Dispositif selon l'une ou plusieurs des revendications 1 à 4, caractérisé en ce que l'un des bras (2) sert de fixation pour un organe de pression (81), disposé à distance de la partie de pontage (4) et s'étendant parallèlement à son axe longitudinal, faisant partie d'une poutre de pression (83) d'un mécanisme de pression (80), et en ce que la poutre de pression (83) est susceptible d'être sollicitée par un mécanisme élastique (90) réglable, prenant appui sur l'autre bras (3).

8. Dispositif selon la revendication 7, caractérisé en ce qu'un élément de butée (91) est disposé du côté, opposé au mécanisme élastique (90), de la poutre de pression (83) et en ce qu'un mécanisme de réglage (99), susceptible de faire pivoter la poutre de pression (83) autour de l'élément de butée (91), est associé à l'extrémité libre de la poutre de pression (83).

9. Dispositif selon la revendication 8, caractérisé en ce que l'élément de butée (91) servant à la limitation de l'angle de pivotement des bras (2,3) se trouvant dans la position de travail est réglable.

10. Dispositif de soudage de feuilles en matière synthétique, comportant un carter (100), formé par deux bras (101,102) et une partie de pontage (103) les reliant ensemble, les bras (101,102) étant susceptible de pivoter, l'un par rapport à l'autre, autour de l'axe longitudinal de la partie de pontage (103), avec un rouleau de pression entraîné (127,133), disposé à l'extrémité libre de chaque bras (101,102), un mécanisme de pression (136), pour presser l'un sur l'autre les rouleaux de pression (127,133) et un élément de chauffage (170), caractérisé en ce que le mécanisme de pression (136) présente un organe de pression (135) en forme de tige, disposé sur l'un des bras (101) et à distance de la partie de pontage (103), sensiblement parallèlement à son axe longitudinal et un mécanisme élastique (155), coopérant avec l'organe de pression (135), prenant appui sur l'autre bras (102), en ce qu'à l'intérieur de l'organe de pression (135) tubulaire est disposé un moto-réducteur (137), servant à l'entraînement des deux rouleaux de pression (127,133) et ne présentant qu'un sortie (arbre 140) et en ce que la sortie (arbre 140) du moto-réducteur (137) est reliée, par un réducteur (143), un arbre (115) monté à rotation à l'intérieur de la partie de pontage (103) et un premier réducteur (128) inversant le sens de rotation, à un rouleau de pression (127) et un deuxième réducteur (134), conservant le sens de rotation, est relié à l'autre rouleau de pression (134).

11. Dispositif selon la revendication 10, caractérisé en ce que l'organe de pression (135) porte un bras de pression (144), s'écartant transversalement et bloqué en rotation, prenant appui sur un élément de butée (rondelle de butée (156) du mécanisme élastique (155) et s'étendant au-dessus du bras (102) non relié à l'organe de pression (135) et en ce qu'à l'extrémité libre (appendice (158) du bras de pression (144) est associé un mécanisme de réglage (168), formé par un excentrique tournant (162) et un levier d'actionnement (163).

12. Dispositif selon la revendication 11 caractérisé en ce que le levier d'actionnement (163) est relié à l'excentrique (162) par l'intermédiaire d'un accouplement (164,165,166) débrayable, présentant plusieurs positions.
